(19) **Europäisches Patentamt / European Patent Office / Office européen des brevets**

(11) **EP 3 857 190 B1**

(12) # EUROPEAN PATENT SPECIFICATION

(45) Date of publication and mention
of the grant of the patent:
**15.01.2025 Bulletin 2025/03**

(21) Application number: **19864245.6**

(22) Date of filing: **25.09.2019**

(51) International Patent Classification (IPC):
**G01K 7/42** *(2006.01)* **G01K 13/02** *(2021.01)*
**G01K 1/143** *(2021.01)* **G01K 15/00** *(2006.01)*

(52) Cooperative Patent Classification (CPC):
**G01K 1/143; G01K 7/427; G01K 13/02;
G01K 15/007**

(86) International application number:
**PCT/US2019/052904**

(87) International publication number:
**WO 2020/068943 (02.04.2020 Gazette 2020/14)**

(54) **NON-INVASIVE PROCESS FLUID TEMPERATURE INDICATION**

NICHTINVASIVE PROZESSFLÜSSIGKEITSTEMPERATURANZEIGE

INDICATION NON INVASIVE DE TEMPÉRATURE DE FLUIDE DE TRAITEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2018 US 201816146152**

(43) Date of publication of application:
**04.08.2021 Bulletin 2021/31**

(73) Proprietor: **Rosemount Inc.
Shakopee, MN 55379 (US)**

(72) Inventors:
• **RUD, Jason H.
Chanhassen, Minnesota 55317 (US)**
• **TRIMBLE, Steven R.
Northeast Prior Lake, Minnesota 55372 (US)**

(74) Representative: **Otten, Roth, Dobler & Partner
mbB Patentanwälte
Großtobeler Straße 39
88276 Berg / Ravensburg (DE)**

(56) References cited:
EP-A1- 2 208 029       WO-A1-2015/099933
WO-A1-2016/146500      DE-A1- 102016 107 335
KR-A- 20180 096 442    US-A1- 2018 003 655
US-A1- 2018 010 978    US-A1- 2018 238 741
US-B2- 7 982 580

**Description**

BACKGROUND

Many industrial processes convey process fluids through pipes or other conduits. Such process fluids can include liquids, gasses, and sometimes entrained solids. These process fluid flows may be found in any of a variety of industries including, without limitation, hygienic food and beverage production, water treatment, high-purity pharmaceutical manufacturing, chemical processing, the hydrocarbon fuel industry, including hydrocarbon extraction and processing as well as hydraulic fracturing techniques utilizing abrasive and corrosive slurries.

It is common to place a temperature sensor within a thermowell, which is then inserted into the process fluid flow through an aperture in the conduit. However, this approach may not always be practical in that the process fluid may have a very high temperature, be very corrosive, or both. Additionally, thermowells generally require a threaded port or other robust mechanical mount/seal in the conduit and thus, must be designed into the process fluid flow system at a defined location. Accordingly, thermowells, while useful for providing accurate process fluid temperatures, have a number or limitations.

From prior art, methods and systems are known to measure and monitor fluid temperature of process fluids, e.g. from US 2018/0003655 A1 or EP 2 208 029 A0 or DE 10 2016 107 335 A1 or US 7,982,580 B2.

More recently, process fluid temperature has been estimated by measuring an external temperature of a process fluid conduit, such as a pipe, and employing a heat flow calculation. This external approach is considered non-invasive because it does not require any aperture or port to be defined in the conduit. Accordingly, such non-intrusive approaches can be deployed at virtually any location along the conduit.

SUMMARY

A process fluid temperature estimation system includes a mounting assembly configured to mount the process fluid temperature estimation system to an external surface of a process fluid conduit. A sensor capsule has at least one temperature sensitive element disposed therein. Measurement circuitry is coupled to the sensor capsule and configured to detect an electrical characteristic of the at least one temperature sensitive element that varies with temperature and provide sensor capsule temperature information. A controller is coupled to the measurement circuitry and is configured to obtain a reference temperature and employ a heat transfer calculation with the reference temperature, the sensor capsule temperature information and the known thermal conductivity of the process fluid conduit to generate an estimated process fluid temperature output. The reference temperature is obtained from a reference temperature source selected from the group consisting of: a terminal temperature sensor, process communication, an electronics temperature sensor, an external ambient temperature sensor, and an estimation based on known thermal properties.

BRIEF DESCRIPTION OF THE DRAWINGS

FIG. 1 is a diagrammatic view of a heat flow measurement system with which embodiments of the present invention are particularly applicable.

FIG. 2 is a block diagram of circuitry within a heat flow measurement system, within a heat flow measurement system, with which embodiments of the present invention are particularly applicable.

FIG. 3 is a diagrammatic cross-sectional view of a sensor capsule with which embodiments of the present invention are particularly applicable.

FIG. 4 is a flow diagram of a method of providing a process fluid temperature measurement in a high temperature application in accordance with an embodiment of the present invention.

DETAILED DESCRIPTION

As set forth above, process fluid temperatures can be estimated by measuring an external temperature of a process fluid conduit, such as a pipe, and employing a heat flow calculation. Such systems generally use the pipe skin (external surface) temperature $T_{skin}$ and a reference temperature $T_{reference}$ and thermal impedance values in the heat flow calculation to infer or otherwise estimate the process fluid temperature within the conduit. This feature generally requires the thermal conductivity to be known from the process fluid to the transmitter terminals. Thus, such systems may require a transmitter terminal temperature sensor to generally be connected or as close as possible to the process fluid temperature transmitter terminals or the "cold end" of the pipe skin sensor. This relationship provides a better correlation between the measurement points in the system ($T_{skin}$, $T_{reference}$). As the process temperature rises, typically the temperature profile will change in the system causing the cold end of the sensor to rise slightly. This change is important to understand to provide a proper inference of the process temperature. For ambient and process temperatures that change slightly or not at all, direct measurements are not necessary between the skin temperature and another temperature point in the mounted assembly for a reasonable correction of the process temperature.

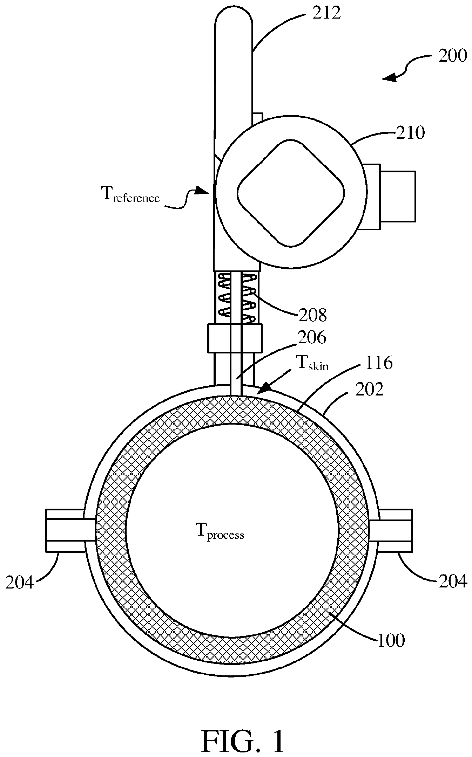

FIG. 1 is a diagrammatic view of a heat flow measurement system with which embodiments of the present invention are particularly applicable. As illustrated, system 200 generally includes a pipe clamp portion 202 that is configured to clamp around conduit or pipe 100. Pipe clamp 202 may have one or more clamp ears 204 in order to allow the clamp portion 202 to be positioned and clamped to pipe 100. Pipe clamp 202 may replace one of clamp ears 204 with a hinge portion such that pipe clamp 202 can be opened to be positioned on a pipe and then closed and secured by clamp ear 204. While the clamp illustrated with respect to FIG. 1 is particularly useful, any suitable mechanical arrangement for securely positioning system 200 about an exterior surface of a pipe can be used in accordance with embodiments described herein.

System 200 includes heat flow sensor capsule 206 that is urged against external diameter 116 of pipe 100 by spring 208. The term "capsule" is not intended to imply any particular structure or shape and can thus be formed in a variety of shapes, sizes and configurations. While spring 208 is illustrated, those skilled in the art will appreciate that various techniques can be used to urge sensor capsule 206 into continuous contact with external diameter 116. Sensor capsule 206 generally includes one or more temperature sensitive elements, such as resistance temperature devices (RTDs). Sensors within capsule 206 are electrically connected to transmitter circuitry within housing 210, which is configured to obtain one or more temperature measurements from sensor capsule 206 and calculate an estimate of the process fluid temperature based on the measurements from sensor capsule 206, and a reference temperature, such as a temperature measured within housing 210, or otherwise provided to circuitry within housing 210.

In one example, the basic heat flow calculation can be simplified into:

$$T_{corrected} = T_{skin} + (T_{skin} - T_{reference}) * (R_{pipe}/R_{sensor}).$$

In this equation, $T_{skin}$ is the measured temperature of the external surface of the conduit. Additionally, $T_{reference}$ is a second temperature obtained relative to a location having a thermal impedance ($R_{sensor}$) from the temperature sensor that measures $T_{skin}$. $T_{reference}$ is typically sensed by a dedicated sensor within housing 210. However, $T_{reference}$ can be sensed or inferred in other ways as well. For example, a temperature sensor can be positioned external to the transmitter to replace the terminal temperature measurement in the heat transfer calculation. This external sensor would measure the temperature of the environment surrounding the transmitter. As another example, industrial electronics typically have onboard temperature measurement capabilities. This electronics temperature measurement can be used as a substitute to the terminal temperature for the heat transfer calculation. As another example, if the thermal conductivity of the system is known and the ambient temperature around the transmitter is fixed or user controlled, the fixed or user controllable temperature can be used as the reference temperature.

$R_{pipe}$ is the thermal impedance of the conduit and can be obtained manually by obtaining pipe material information, pipe wall thickness information, etc. Additionally, or alternately, a parameter related to $R_{pipe}$ can be determined during a calibration and stored for subsequent use. Accordingly, using a suitable heat flux calculation, such as that described above, circuitry within housing 210 is able to calculate an estimate for the process fluid temperature ($T_{corrected}$) and convey an indication regarding such process fluid temperature to suitable devices and/or a control room. In the example illustrated in FIG. 1, such information may be conveyed wirelessly via antenna 212.

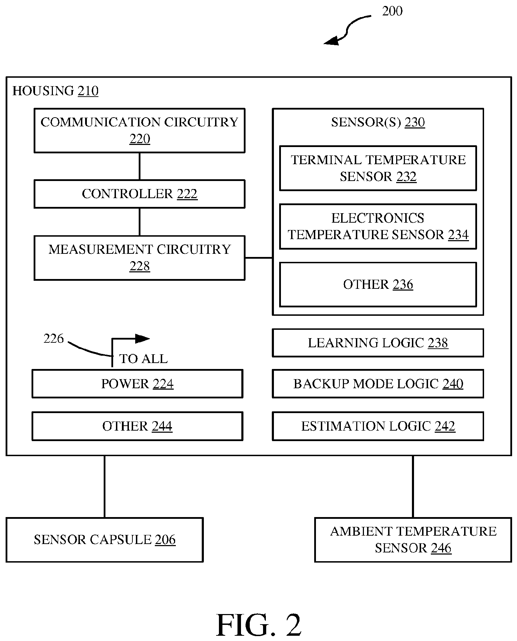

FIG. 2 is a block diagram of circuitry within housing 210 of heat flow measurement system 200, with which embodiments of the present invention are particularly applicable. System 200 includes communication circuitry 220 coupled to controller 222. Communication circuitry 220 can be any suitable circuitry that is able to convey information regarding the estimated process fluid temperature Communication circuitry 220 allows heat flow measurement system 200 to communicate the process fluid temperature output over a process communication loop or segment. Suitable examples of process communication loop protocols include the 4-20 milliamp protocol, Highway Addressable Remote Transducer (HART®) protocol, FOUNDATION™ Fieldbus Protocol, and the WirelessHART protocol (IEC 62591).

Heat flow measurement system 200 also includes power supply module 224 that provides power to all components of system 200 as indicated by arrow 226. In embodiments where heat flow measurement system 200 is coupled to a wired process communication loop, such as a HART® loop, or a FOUNDATION™ Fieldbus segment, power module 224 may include suitable circuitry to condition power received from the loop or segment to operate the various components of system 200. Accordingly, in such wired process communication loop embodiments, power supply module 224 may provide suitable power conditioning to allow the entire device to be powered by the loop to which it is coupled. In other embodiments, when wireless process communication is used, power supply module 224 may include a source of power, such as a battery and suitable conditioning circuitry.

Controller 222 includes any suitable arrangement that is able to generate a heat-flow based process fluid temperature estimate using measurements from sensor(s) within capsule 206 and an additional reference temperature, such as a terminal temperature within housing 210. In one example, controller 222 is a microprocessor. Controller 222 is communicatively coupled to communication circuitry 220.

Measurement circuitry 228 is coupled to controller 222 and provides digital indications with respect to measurements obtained from one or more temperature sensors 230. Measurement circuitry 228 can include one or more analog-to-digital converters and/or suitable multi-plexing circuitry to interface the one or more analog-to-digital converters to temperature sensors 230. Additionally, measurement circuitry 228 can include suitable amplification and/or linearization circuitry as may be appropriate for the various types of temperature sensors employed.

Temperature sensors 230 illustratively include terminal temperature sensor 232, electronics temperature sensor 234 and can include other items as well, as indicated by block 236. Electronics temperature sensor 234 is coupled to the electronic circuitry of system 200 and is used to determine the temperature of the electronics. Typically, electronics temperature sensor 234 is used to protect the electronic circuitry from overheating. For example, when the electronics reach a certain temperature, a fan is turned on to reduce that temperature. In one embodiment, electronics temperature sensor 234 senses the reference temperature.

According to one embodiment, system 200 also includes a variety of different logic components as indicated by blocks 238-242. Each logic component provides a variety of different functions, that can be performed by controller 222. Backup mode logic 238 monitors the status of terminal temperature sensor 232, and in the event of sensor failure or malfunction, turns on a backup mode. That is, a mode where the reference temperature is received from a source other than terminal temperature sensor 232. This is an example of controller logic determining the occurrence of a reference temperature switchover event. This way in the event of sensor failure or malfunction the measurement point does not have to go completely off-line. In another example, controller 222 may receive a commend, either through local technician interaction with system 200 or via process communication, to switch to an alternate reference temperature source. Other suitable conditions for determining the occurrence of a reference temperature switchover event can be practiced in accordance with embodiments described herein.

During normal operation, information can be learned, by learning logic 238, about the correlation between the conduit skin temperature and terminal temperature measurements. If one or the other measurement points fail (terminal temperature or skin temperature sensors), the learned correlation can be applied as an additional backup mode option.

Estimation logic 242 can calculate the reference temperature with the measured skin temperature changes, if the thermal conductivity of the system is known and/or the ambient temperature around the transmitter is fixed or controlled.

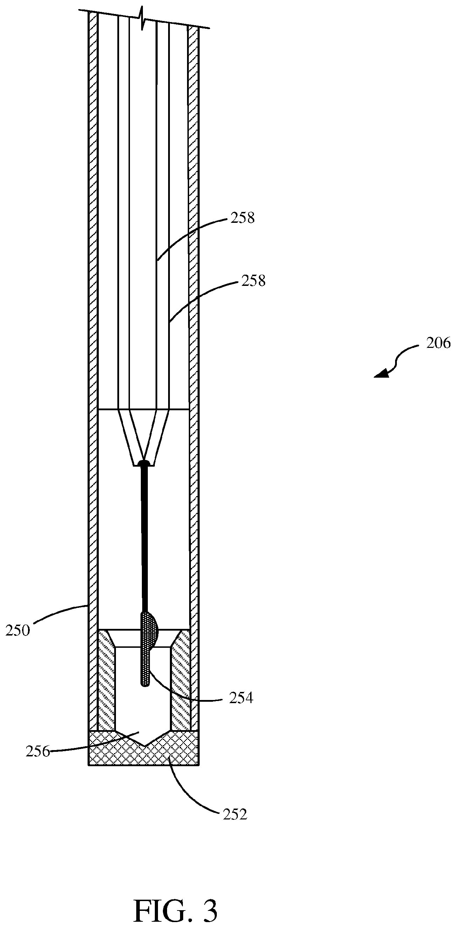

FIG. 3 is a diagrammatic view of a sensor capsule with which embodiments of the present invention are particularly applicable. Sensor capsule 206 generally includes a cylindrical side wall 250 with an endcap 252 coupled thereto. In one example, endcap 252 is formed of silver. One or more RTD elements 254 are disposed proximate endcap 252 and are provided in thermal communication with endcap 252 via thermal grease 256. Conductors 258 electrically couple RTD element(s) 254 to measurement circuitry within housing 210. In one embodiment, element 254 is formed in accordance with thin-film RTD technology. Thin-film RTDs are generally considered to be very rugged and generally low cost. A thin-film element is typically manufactured by coating a small ceramic chip with a very thin (such as .0001 inch) film of a temperature-sensitive metal (such as platinum) and then laser cutting or chemical or chemical etching a resistance path in the metal film.

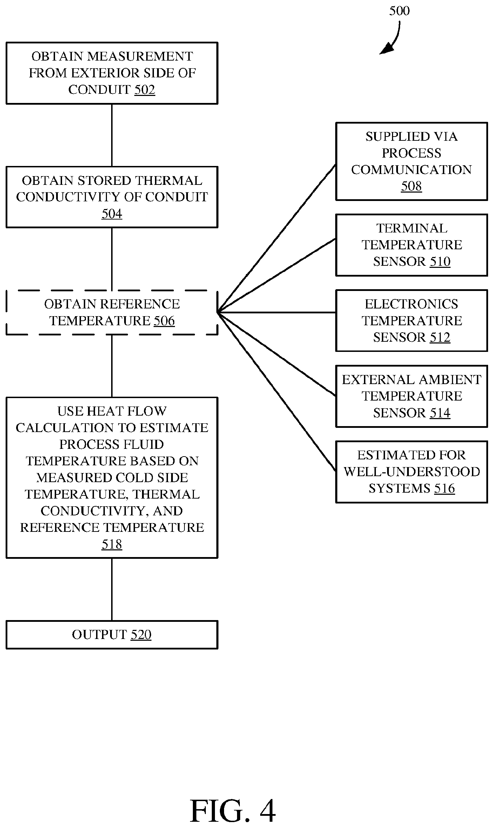

FIG. 4 is a flow diagram of a method of estimating and providing a process fluid temperature based on heat flow in accordance with an embodiment to the present invention. Method 500 begins at block 502 where a temperature is measured from an external diameter of a process fluid conduit, such as pipe 100. Next, at block 504, a stored thermal conductivity of the conduit is obtained. This step can be preformed by accessing local memory of controller 222 of the system, or by communicating with an external device, such as a process controller, to receive information indicative of the thermal conductivity of the conduit.

Next, at optional block 506, a referenced temperature is obtained. This reference temperature may be obtained in a variety of ways. For example, the reference temperature may be obtained via receiving process communication indicating the reference temperature, as indicated at block 508. Alternately, at block 510, the reference temperature is measured by the system. In one example, this measurement is a temperature measurement at a location within housing 210, such as at a terminal block. As another example, a reference temperature can be obtained via electronics temperature sensors, as indicated by block 512. However, these are only examples and the measurement can be obtained from any location having a relatively fixed thermal relationship with respect to external diameter 116 of process fluid conduit 100. Via this fixed thermal arrangement, the flow of heat from the process fluid conduit to the reference temperature location is fixed and thus follows the heat flow calculation described above.

Additionally, the reference temperature may be obtained by an external ambient temperature sensor, as indicated at block 514. For example, if the process fluid conduit is located within a climate-controlled interior of a facility, the nominal temperature of the climate (such as 70 degrees Fahrenheit) can be used for the reference temperature.

Further, the reference temperature, in well understood systems, may be estimated, as indicated by block 516. For example, learning logic 238 determines a pattern between the skin temperature and another variable, indicative of a relationship to a reference temperature. Then estimation logic 242 uses this pattern to determine a reference temperature.

At block 518, the measured temperature of the conduit skin, thermal conductivity of the conduit, and reference temperature, are applied to a heat flow calculation, such as that set forth above, to calculate an estimate of process fluid temperature. Finally, at block 520, the estimated process fluid temperature is output. In one example, the output is communicated over a process communication loop in accordance with a process communication protocol, such as that set forth above.

While the present invention has been described with respect to diagnostics relative to an internal diameter of a pipe, such diagnostics can be extended to thermowells, less invasive thermowells, external temperatures, and insulated bare capsule sensors. Further, while the present invention has been described with respect to a non-invasive process fluid estimation system, those skilled in the art will appreciate that certain aspects of the present invention are applicable to thermowells, which are considered to be invasive in that they extend into the conduit.

**Claims**

1.   A method of estimating process fluid temperature ($T_{corrected}$) within a conduit (100) by a process fluid temperature estimation system (200), the method comprising:

obtaining a conduit temperature ($T_{skin}$) proximate a process conduit (100) by a heat flow sensor capsule (206);
obtaining thermal conductivity information ($R_{pipe}$) relative to the process conduit (100);
obtaining a reference temperature ($T_{reference}$) from a transmitter terminal temperature sensor (232); and
storing the thermal conductivity information ($R_{pipe}$) in the process fluid temperature estimation system (200) to use in a heat transfer equation for estimating process fluid temperature, ($T_{corrected}$) based at least on the conduit temperature ($T_{skin}$), the reference temperature ($T_{reference}$), and the thermal conductivity ($R_{pipe}$),
the method being **characterized in that** it further comprises the following steps:

determining if a reference temperature switchover event has occurred; and
based on the determination, obtaining a second reference temperature ($T_{reference}$) from a second source, wherein the reference temperature switchover event is a malfunction of the transmitter terminal temperature sensor (232).

2.   The method of claim 1, wherein obtaining the second reference temperature ($T_{reference}$) includes receiving process communication indicative of the reference temperature ($T_{reference}$).

3.   The method of claim 1, wherein obtaining the second reference temperature ($T_{reference}$) includes measuring a temperature of electronics within a housing (210) of the process fluid temperature estimation system (200).

4.   The method of claim 1, wherein obtaining the second reference temperature ($T_{reference}$) includes estimating the second reference temperature ($T_{reference}$) based on known process properties.

5.   The method of claim 1, wherein obtaining the second reference temperature ($T_{reference}$) includes receiving the second reference temperature ($T_{reference}$) from an ambient temperature sensor

6.   A process fluid temperature estimation system (200) comprising:

a mounting assembly configured to mount the process fluid temperature estimation system (200) to an external surface of a process fluid conduit (100);
a heat flow sensor capsule (206) having at least one temperature sensitive element (254) disposed therein:

measurement circuitry coupled to the heat flow sensor capsule (206) and configured to detect an electrical characteristic of the at least one temperature sensitive element (254) that varies with temperature and provide heat flow sensor capsule temperature information ($T_{skin}$); and
a controller (222) coupled to the measurement circuitry, the controller (222) being configured to obtain thermal conductivity information ($R_{pipe}$) relative to the process conduit (100), obtain a reference temperature ($T_{reference}$) from a transmitter terminal temperature sensor (232) and employ a heat transfer calculation with at least the conduit temperature ($T_{skin}$), the reference temperature ($T_{reference}$) and the thermal conductivity ($R_{pipe}$) to generate an estimated process fluid temperature output ($T_{corrected}$), **characterized in that** the controller (222) is further configured to determine if a reference temperature switchover event has occurred,

and based on the determination, to obtain a second reference temperature ($T_{reference}$) from a second source, wherein the reference temperature switchover event is a malfunction of the transmitter terminal temperature sensor (232).

7. The process fluid temperature estimation system (200) of claim 6, further comprising backup logic (240) that detects a malfunction of the transmitter terminal temperature sensor (232), and provides a second reference temperature ($T_{reference}$) to the controller (222).

8. The process fluid temperature estimation system of claim 7, wherein the backup logic (240) receives the second reference temperature ($T_{reference}$) from an electronics temperature sensor (234).

9. The process fluid temperature estimation system (200) . of claim 7, wherein the backup logic (240) receives the second reference temperature ($T_{reference}$) from estimation logic that is configured to estimate the second reference temperature ($T_{reference}$) based on known thermal properties of the system (200).

10. The process fluid temperature estimation system of claim 6, and further comprising communication circuitry (220) coupled to the controller (222) and configured to communicate in accordance with a process communication loop protocol.

11. The process fluid temperature estimation system of claim 10, wherein the communication circuitry (220) is configured to communicate wirelessly.

12. The process fluid temperature estimation system of claim 6, wherein the heat flow sensor capsule (206) has an end cap (252), and the at least one temperature sensitive element (234) is thermally coupled to the end cap (252).


**Patentansprüche**

1. Verfahren zum Schätzen einer Prozessfluidtemperatur ($T_{corrected}$) in einer Leitung (100) durch ein Prozessfluidtemperaturschätzsystem (200), wobei das Verfahren Folgendes umfasst:

Erhalten einer Leitungstemperatur ($T_{skin}$) in der Nähe einer Prozessleitung (100) durch eine Wärmestromsensorkapsel (206);
Erhalten von Wärmeleitfähigkeitsinformationen ($R_{pipe}$) in Bezug auf die Prozessleitung (100);
Erhalten einer Bezugstemperatur ($T_{reference}$) von einem Sendeanschlusstemperatursensor (232) und
Speichern der Wärmeleitfähigkeitsinformationen ($R_{pipe}$) im Prozessfluidtemperaturschätzsystem (200) zur Verwendung in einer Wärmeübertragungsgleichung zum Schätzen einer Prozessfluidtemperatur ($T_{corrected}$) mindestens auf der Grundlage der Leitungstemperatur ($T_{skin}$), der Bezugstemperatur ($T_{reference}$) und der Wärmeleitfähigkeit ($R_{pipe}$), wobei
das Verfahren ferner **gekennzeichnet ist durch**:

Bestimmen, ob ein Bezugstemperaturumschaltereignis aufgetreten ist; und
Erhalten einer zweiten Bezugstemperatur ($T_{reference}$) von einer zweiten Quelle auf der Grundlage der Bestimmung, wobei
das Bezugstemperaturumschaltereignis eine Fehlfunktion des Sendeanschlusstemperatursensors (232) ist.

2. Verfahren nach Anspruch 1, wobei das Erhalten der zweiten Bezugstemperatur ($T_{reference}$) das Empfangen einer Prozesskommunikation enthält, die die Bezugstemperatur ($T_{reference}$) angibt.

3. Verfahren nach Anspruch 1, wobei das Erhalten der zweiten Bezugstemperatur ($T_{reference}$) das Messen einer Temperatur der Elektronik in einem Gehäuse (210) des Prozessfluidtemperaturschätzsystems (200) umfasst.

4. Verfahren nach Anspruch 1, wobei das Erhalten der zweiten Bezugstemperatur ($T_{reference}$) das Schätzen der zweiten Bezugstemperatur ($T_{reference}$) auf der Grundlage bekannter Prozesseigenschaften umfasst.

5. Verfahren nach Anspruch 1, wobei das Erhalten der zweiten Bezugstemperatur ($T_{reference}$) das Empfangen der zweiten Bezugstemperatur ($T_{reference}$) von einem Umgebungstemperatursensor umfasst.

**6.** Prozessfluidtemperaturschätzsystem (200), das Folgendes umfasst:

eine Befestigungsanordnung, die konfiguriert ist, das Prozessfluidtemperaturschätzsystem (200) an einer Außenoberfläche einer Prozessfluidleitung (100) zu befestigen;
eine Wärmestromsensorkapsel (206), die mindestens ein temperaturempfindliches Element (254) aufweist, das darin angeordnet ist;
eine Messschaltungsanordnung, die an die Wärmestromsensorkapsel (206) gekoppelt ist und konfiguriert ist, eine elektrische Eigenschaft des mindestens einen temperaturempfindlichen Elements (254), die mit der Temperatur variiert, zu detektieren und Wärmestromsensorkapsel-Temperaturinformationen ($T_{skin}$) zu liefern; und
eine Steuereinheit (222), die an die Messschaltungsanordnung gekoppelt ist, wobei die Steuereinheit (222) konfiguriert ist, Wärmeleitfähigkeitsinformationen ($R_{pipe}$) in Bezug auf die Prozessleitung (100) zu erhalten, eine Bezugstemperatur ($T_{reference}$) von einem Sendeanschlusstemperatursensor (232) zu erhalten und eine Wärmeübertragungsberechnung mit mindestens der Leitungstemperatur ($T_{skin}$), der Bezugstemperatur ($T_{reference}$) und der Wärmeleitfähigkeit ($R_{pipe}$) einzusetzen, um eine geschätzte Prozessfluidtemperaturausgabe ($T_{corrected}$) zu erzeugen,
**dadurch gekennzeichnet, dass** die Steuereinheit (222) ferner konfiguriert ist, zu bestimmen, ob ein Bezugstemperaturumschaltereignis aufgetreten ist, und auf der Grundlage der Bestimmung eine zweite Bezugstemperatur ($T_{reference}$) von einer zweiten Quelle zu erhalten, wobei das Bezugstemperaturumschaltereignis eine Fehlfunktion des Sendeanschlusstemperatursensors (232) ist.

**7.** Prozessfluidtemperaturschätzsystem (200) nach Anspruch 6, das ferner eine Sicherungslogik (240) umfasst, die eine Fehlfunktion des Sendeanschlusstemperatursensors (232) detektiert und eine zweite Bezugstemperatur ($T_{reference}$) zur Steuereinheit (222) liefert.

**8.** Prozessfluidtemperaturschätzsystem nach Anspruch 7, wobei die Sicherungslogik (240) die zweite Bezugstemperatur ($T_{reference}$) von einem Elektroniktemperatursensor (234) empfängt.

**9.** Prozessfluidtemperaturschätzsystem (200) nach Anspruch 7, wobei die Sicherungslogik (240) die zweite Bezugstemperatur ($T_{reference}$) von einer Schätzlogik empfängt, die konfiguriert ist, die zweite Bezugstemperatur ($T_{reference}$) auf der Grundlage bekannter Wärmeeigenschaften des Systems (200) zu schätzen.

**10.** Prozessfluidtemperaturschätzsystem nach Anspruch 6, das ferner eine Kommunikationsschaltungsanordnung (220) umfasst, die an die Steuereinheit (222) gekoppelt ist und konfiguriert ist, gemäß einem Prozesskommunikationsschleifenprotokoll zu kommunizieren.

**11.** Prozessfluidtemperaturschätzsystem nach Anspruch 10, wobei die Kommunikationsschaltungsanordnung (220) konfiguriert ist, drahtlos zu kommunizieren.

**12.** Prozessfluidtemperaturschätzsystem nach Anspruch 6, wobei die Wärmestromsensorkapsel (206) eine Stirnkappe (252) aufweist und das mindestens eine temperaturempfindliche Element (234) an die Stirnkappe (252) thermisch gekoppelt ist.

**Revendications**

**1.** Procédé d'estimation de température de fluide de processus ($T_{corrected}$) à l'intérieur d'un conduit (100) exécuté par un système d'estimation de température de fluide de processus (200), ce procédé comprenant :

l'obtention d'une température de conduit ($T_{skin}$) proximale à un conduit de processus (100) par une capsule de détection de flux de chaleur (206) ;
l'obtention d'informations de conductivité thermique ($R_{pipe}$) relatives au conduit de processus (100) ;
l'obtention d'une température de référence ($T_{reference}$) venant d'un capteur de température de bornes d'émetteur (232) ; et
le stockage des informations de conductivité thermique ($R_{pipe}$) dans le système d'estimation de température de fluide de processus (200) pour les utiliser dans une équation de transfert de chaleur afin d'estimer la température du fluide de processus ($T_{corrected}$) en se basant au moins sur la température du conduit ($T_{skip}$), sur la température de référence ($T_{reference}$) et sur la conductivité thermique ($R_{pipe}$),

ce procédé étant **caractérisé en ce qu'**il comprend en outre les étapes suivantes :

la détermination de si un événement de commutation de température de référence s'est produit ; et
en se basant sur cette détermination, l'obtention d'une deuxième température de référence ($T_{reference}$) en provenance d'une deuxième source,
l'évènement de commutation de température de référence étant un mauvais fonctionnement du capteur de température de bornes d'émetteur (232).

2. Procédé selon la revendication 1, dans lequel l'obtention de la deuxième température de référence ($T_{reference}$) comprend :
la réception d'une communication de processus de la température de référence ($T_{reference}$) .

3. Procédé selon la revendication 1, dans lequel l'obtention de la deuxième température de référence ($T_{reference}$) comprend :
la mesure d'une température d'électronique à l'intérieur d'un boîtier (210) du système d'estimation de température de fluide de processus (200).

4. Procédé selon la revendication 1, dans lequel l'obtention de la deuxième température de référence ($T_{reference}$) comprend :
l'estimation de la deuxième température de référence ($T_{reference}$) en se basant sur des propriétés connues du processus.

5. Procédé selon la revendication 1, dans lequel l'obtention de la deuxième température de référence ($T_{reference}$) comprend :
la réception de la deuxième température de référence ($T_{reference}$) en provenance d'un capteur de température ambiante.

6. Système d'estimation de température de fluide de processus (200) comprenant :

en ensemble de montage configuré de façon à monter le système d'estimation de température de fluide de processus (200) sur une surface externe d'un conduit de fluide de processus (100) ;
une capsule de détection de flux de chaleur (206) ayant au moins un élément sensible à la température (254) disposé à l'intérieur de celle-ci ;
un ensemble de circuits de mesure couplés à la capsule de détection de flux de chaleur (206) et configurés de façon à détecter une caractéristique électrique de l'au moins un élément sensible à la température (254) qui varie avec la température et à fournir des informations de température de la capsule de détection de flux de chaleur ($T_{skin}$) ; et
un contrôleur (222) couplé à l'ensemble de circuits de mesure, ce contrôleur (222) étant configuré de façon à obtenir des informations de conductivité thermique ($R_{pipe}$) relatives au conduit du processus (100), à obtenir une température de référence ($T_{reference}$) venant d'un capteur de température de bornes d'émetteur (232) et à utiliser un calcul de transfert de chaleur avec au moins la température du conduit ($T_{skin}$), la température de référence ($T_{reference}$) et la conductivité thermique ($R_{pipe}$) afin de générer une sortie de température estimée du fluide de processus ($T_{corrected}$), **caractérisé en ce que** ce contrôleur (222) est configuré en outre de façon à déterminer si un événement de commutation de température de référence s'est produit et, en se basant sur cette détermination, de façon à obtenir une deuxième température de référence ($T_{reference}$) en provenance d'une deuxième source, l'évènement de commutation de température de référence étant un mauvais fonctionnement du capteur de température de bornes d'émetteur (232).

7. Système d'estimation de température de fluide de processus (200) selon la revendication 6, comprenant en outre une logique de soutien (240) qui détecte un mauvais fonctionnement du capteur de température de bornes d'émetteur (232), et qui fournit une deuxième température de référence ($T_{reference}$) au contrôleur (222).

8. Système d'estimation de température de fluide de processus selon la revendication 7, dans lequel la logique de soutien (240) reçoit la deuxième température de référence ($T_{reference}$) en provenance d'un capteur de température d'électronique (234).

9. Système d'estimation de température de fluide de processus (200) selon la revendication 7, dans lequel la logique de soutien (240) reçoit la deuxième température de référence ($T_{reference}$) venant d'une logique d'estimation qui est configurée de façon à estimer la deuxième température de référence ($T_{reference}$) en se basant sur des propriétés thermiques connues du système (200).

10. Système d'estimation de température de fluide de processus selon la revendication 6, et comprenant en outre un ensemble de circuits de communication (220) couplés au contrôleur (222) et configurés de façon à communiquer conformément à un protocole de boucle de communication de processus.

11. Système d'estimation de température de fluide de processus selon la revendication 10, dans lequel l'ensemble de circuits de communication (220) est configuré de façon à communiquer sans fil.

12. Système d'estimation de température de fluide de processus selon la revendication 6, dans lequel la capsule de détection de flux de chaleur (206) a un capuchon d'extrémité (252), et l'au moins un élément sensible à la température (234) est couplé thermiquement à ce capuchon d'extrémité (252).

FIG. 1

200

HOUSING 210

COMMUNICATION CIRCUITRY 220

SENSOR(S) 230

TERMINAL TEMPERATURE SENSOR 232

CONTROLLER 222

ELECTRONICS TEMPERATURE SENSOR 234

MEASUREMENT CIRCUITRY 228

OTHER 236

226

TO ALL

LEARNING LOGIC 238

POWER 224

BACKUP MODE LOGIC 240

OTHER 244

ESTIMATION LOGIC 242

SENSOR CAPSULE 206

AMBIENT TEMPERATURE SENSOR 246

FIG. 2

FIG. 3

500

OBTAIN MEASUREMENT
FROM EXTERIOR SIDE OF
CONDUIT 502

OBTAIN STORED THERMAL
CONDUCTIVITY OF CONDUIT
504

OBTAIN REFERENCE
TEMPERATURE 506

SUPPLIED VIA
PROCESS
COMMUNICATION
508

TERMINAL
TEMPERATURE
SENSOR 510

ELECTRONICS
TEMPERATURE
SENSOR 512

EXTERNAL AMBIENT
TEMPERATURE
SENSOR 514

USE HEAT FLOW
CALCULATION TO ESTIMATE
PROCESS FLUID
TEMPERATURE BASED ON
MEASURED COLD SIDE
TEMPERATURE, THERMAL
CONDUCTIVITY, AND
REFERENCE TEMPERATURE
518

ESTIMATED FOR
WELL-UNDERSTOOD
SYSTEMS 516

OUTPUT 520

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180003655 A1
- EP 2208029 A0
- DE 102016107335 A1
- US 7982580 B2